# EUROPÄISCHE PATENTSCHRIFT

(11) **EP 2 438 491 B1**
(45) Veröffentlichungstag und Bekanntmachung des Hinweises auf die Patenterteilung: **13.03.2013**
(21) Anmeldenummer: 10724704.1
(22) Anmeldetag: 27.05.2010
(51) Int. Cl.: G05B 19/19, G05B 19/416

(54) **VERFAHREN UND VORRICHTUNG ZUR GENERIERUNG EINES VARIABLEN BEWEGUNGSPROFILS FÜR EINE ANTRIEBSEINHEIT EINER MASCHINE**
METHOD AND APPARATUS FOR GENERATING A VARIABLE MOTION PROFILE FOR A DRIVE OF A MACHINE
PROCÉDÉ ET DISPOSITIF POUR GÉNÉRER UN PROFIL DE MOUVEMENT VARIABLE POUR UNE UNITÉ D'ENTRAÎNEMENT D'UNE MACHINE

(30) Priorität: 02.06.2009 DE 102009023475
(43) Veröffentlichungstag der Anmeldung: 11.04.2012
(73) Patentinhaber: Robert Bosch GmbH, 70469 Stuttgart (DE)
(72) Erfinder: KRAUSKOPF, Sebastian, 97737 Gemünden-Schaippach (DE); KORAJDA, Bartosz; Dr., 97816 Lohr-Sendelbach (DE); STICKEL, Oliver, 97816 Lohr am Main (DE)
(74) Vertreter: Thürer, Andreas
(86) Internationale Anmeldenummer: PCT/EP2010/003214
(87) Internationale Veröffentlichungsnummer: WO 2010/139417

(56) Entgegenhaltungen:
- EP-A1- 1 956 453
- EP-A2- 0 850 862

## Beschreibung

Die vorliegende Erfindung bezieht sich auf ein Verfahren zur Generierung eines variablen Bewegungsprofils für eine Antriebseinheit einer Maschine sowie auf eine entsprechende Vorrichtung.

Maschinen zur Verarbeitung oder Handhabung von Produkten weisen eine Maschinenprogrammierung auf, mittels der die Maschine so angesteuert wird, dass sie eine vorbestimmte Bewegung auszuführt. Dabei wird eine entsprechende Bewegungsbahn fix für ein Setup bzw. ein Bewegungsproblem festgelegt. Der dazu notwendige Programmcode für die Maschinenprogrammierung wird händisch erstellt

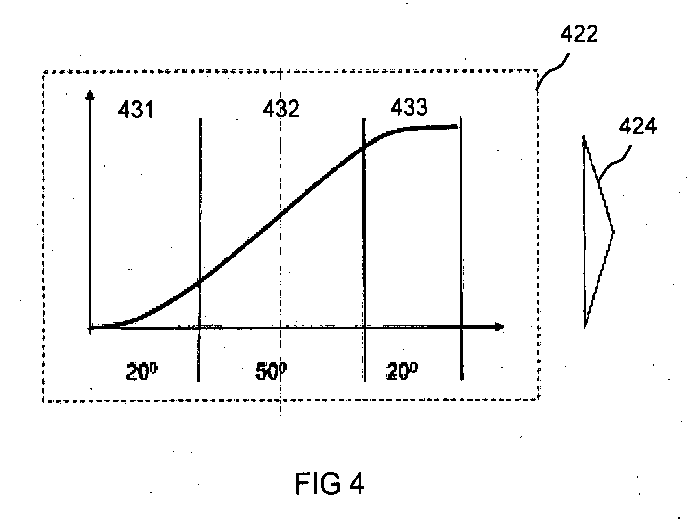

Fig. 4 zeigt eine graphische Darstellung zur Umsetzung eines starren Bewegungsprofils 422 durch eine händische Codeanpassung 424, gemäß dem Stand der Technik. Das Bewegungsprofil 422 ist durch einen Graphen dargestellt, die einen ersten Schritt 431, einen zweiten Schritt 432 und einen dritten Schritt 433 aufweist. Der erste Schritt 431 definiert eine 20° Bewegung, der zweite Schritt 432 definiert eine 50° Bewegung und der dritte Schritt 433 definiert eine 20° Bewegung einer Antriebseinheit einer Maschine. Basierend auf dem Bewegungsprofil 422 kann die händische Codeanpassung 424 durchgeführt werden.

Diese Vorgehensweise hat einen erhöhten Entwicklungsaufwand zur Folge, der sich durch die manuelle Programmcodeerstellung und Anpassung ergibt. Zudem ist aufgrund einer starren Bewegungsbahn eine geringe Flexibilität gegeben.

Die EP 0 850 862 A2 befasst sich mit einer Generierung eines Bewegungsprofils einer Glassformmaschine. Das Bewegungsprofil wird grafisch dargestellt.

Die EP 1 956453 A1 befasst sich mit einem Verfahren zum Betreiben von gesteuerten Maschinen, wobei eine Folgebewegung wenigstens eines bewegbaren Maschinenelements der Maschine unter Verwendung eines für die Bewegung spezifischen Bewegungsprofils gesteuert. Das Bewegungsprofil der Bewegung des Maschinenelements ist in mehrere Profilsegmente unterteilt.

Es ist die Aufgabe der vorliegenden Erfindung, ein Verfahren zur Generierung eines variablen Bewegungsprofils für eine Antriebseinheit einer Maschine sowie eine entsprechende Vorrichtung zu schaffen.

Diese Aufgabe wird durch ein Verfahren gemäß Anspruch 1 sowie eine Vorrichtung gemäß Anspruch 14 gelöst.

Der vorliegenden Erfindung liegt die Erkenntnis zu Grunde, dass die Bewegungsbahn einer Maschine variabel definiert werden kann. Insbesondere kann ein Bewegungsproblem mittels Randbedingungen, Variablen und Formelabhängigkeiten definiert werden. Eine solche variable Definition kann bereits in einem frühen Entwicklungsstadium, vor der eigentlichen Erstellung des Programmcodes erfolgen. Insbesondere können vor der eigentlichen Programmcodeerstellung graphische Simulationen und Visualisierungen durchgeführt werden, mittels denen sich die gewählte variable Definition überprüfen, und sofort graphisch darstellen lässt. Erfindungsgemäß wird somit auch ein Verfahren zur Generierung von produktspezifischen, variablen Bewegungsabläufen geschaffen. Die variable Definition kann mittels eines entsprechenden Entwicklungsprogramms erfolgen.

Die Erfindung bietet eine Engineering-Lösung für Bewegungsprobleme, bei denen sich die Bewegungsbahn sehr oft ändert. Damit können flexible Maschinen geschaffen werden, die an eine steigende Produktvielfalt angepasst sind. Zudem kann der Entwicklungsprozess deutlich vereinfacht, beschleunigt und damit deutlich verkürzt werden. Insbesondere können Bewegungsprobleme einfacher, schneller und effizienter auf Bewegungsprofile übertragen werden.

Durch die erfindungsgemäße Funktionalität kann eine optimale und vor allem flexible Bewegungsführung und Bewegungssteuerung, beispielsweise bei Verpackungsmaschinen, Druckmaschinen, Textilmaschinen und Automatisierungsanlagen umgesetzt werden.

Vorteilhafterweise ist eine Integration des erfindungsgemäßen Ansatzes in einen allgemeinen und existierenden Engineering-Prozess sowie in bestehende Tools möglich. Dabei lassen sich schnellere Entwicklungszeiten und ein vereinfachtes Engineering realisieren. Insbesondere kann das händische Erstellen des nötigen Programmcodes entfallen, da der Programmcode automatisch generiert werden kann. Zudem ermöglicht eine visuelle Simulation im Vorfeld eine bessere und schnellere Analyse des Bewegungsproblems. Ferner ist durch eine Definition symbolischer, statt starrer Zusammenhänge, eine flexiblere Maschinenprogrammierung möglich.

Die vorliegende Erfindung schafft ein Verfahren zur Generierung eines variablen Bewegungsprofils für eine Antriebseinheit einer Maschine, das die folgenden Schritte umfasst: Vorbestimmen einer Mehrzahl von Randbedingungen, um das variable Bewegungsprofil zu definieren, wobei mindestens eine der Randbedingung unter Verwendung mindestens einer Variablen und/oder Formelbeziehung definiert wird; Graphisches Darstellen eines, auf der Mehrzahl von Randbedingungen basierenden Bewegungsprofils; und Abbilden der Mehrzahl von Randbedingungen auf einen Programmcode, wobei der Programmcode mindestens einen, der Variablen zugeordneten Platzhalter und/oder ein aufgelöstes Gleichungssystem der Formelbeziehung umfasst, und wobei der Programmcode geeignet ist, um die Antriebseinheit entsprechend dem variablen Bewegungsprofil anzusteuern.

Bei der Maschine kann es sich um eine Vorrichtung handeln, die im Zusammenhang mit Verpackungs-, Druck-, Textil-, oder Automatisierungsanlagen eingesetzt wird. Die Maschine kann ausgebildet sein, um ein Produkt, ein Erzeugnis oder allgemein einen Gegenstand zu transportieren, zu bewegen oder zu handhaben. Die Antriebseinheit kann einen elektrisch, hydraulisch oder pneumatisch angetriebenen Motor umfassen. Die Antriebseinheit kann ausgebildet sein, um eine Drehbewegung oder eine lineare Bewegung auszuführen. Die Antriebseinheit kann von einer Antriebssteuerung angesteuert werden, die ausgebildet ist, um einen Programmcode auszuführen. Das variable Bewegungsprofil kann einen zeitlichen Bewegungsablauf definieren, der eine von der Antriebseinheit durchzuführenden Bewegung entspricht. Variabel kann dabei bedeuten, dass ein Grundschema des Bewegungsablaufs vordefiniert ist,
Einzelbewegungen jedoch variabel an aktuelle Problemstellungen angepasst werden können; Dadurch können beispielsweise Zeitpunkte, Geschwindigkeiten oder der Umfang einzelner Bewegungen zur Programmlaufzeit angepasst werden. Somit kann das variable Bewegungsprofil eine Mehrzahl unterschiedlicher spezieller Bewegungsprofile umfassen, die an eine jeweilige Situation angepasst sein können. Eine Randbedingung kann dabei eine bestimmte Bewegung definieren, die von der Antriebseinheit ausgeführt werden kann. Die Mehrzahl von Randbedingungen können beispielsweise über eine Mensch-Maschine-Schnittstelle in eine Vorrichtung zur Bestimmung der Mehrzahl von Randbedingungen eingegeben werden. Bei der Variablen kann es sich um eine veränderliche Variable und bei der Formelbeziehung um eine beliebige Formelbeziehung handeln. In der Formelbeziehung kann auf eine andere Randbedingung verwiesen werden. Wobei diese Randbedingung selbst wieder durch Angabe von symbolischen Größen, Zusammenhängen und Formelbeziehungen definiert sein kann. Eine beliebige Rekursion ist möglich sofern sich kein Zirkelbezug ergibt. Die grafische Darstellung kann mittels einer geeigneten graphischen Oberfläche erfolgen. Dabei kann das Bewegungsprofil beispielsweise in Form eines Graphen angezeigt werden. Für die Variabel kann dabei eine vorbestimmter oder ein generierter Wert eingesetzt werden. Die Mehrzahl von Randbedingungen können mittels eines geeigneten Algorithmus auf den Programmcode abgebildet werden. Der Programmcode kann eine Mehrzahl von Befehlen aufweisen, die beispielsweise von der Antriebssteuerung ausgeführt werden können. Durch eine Ausführung des Programmcodes kann die Antriebseinheit so angesteuert werden, dass sie ein aktuelles Bewegungsprofil umsetzt, das von einem aktuellen Wert abhängt, der für die Variabel eingesetzt wird. Das aufgelöste Gleichungssystem kann dabei ebenfalls in Form von Programmbefehlen dargestellt sein.

Dabei kann der Programmcode ausgebildet sein, um bei seiner Ausführung den mindestens einen Platzhalter mit einem aktuellen Parameter zu ersetzen und/oder ein Ergebnis des aufgelösten Gleichungssystems der Formelbeziehung zu berechnen. Auf diese Weise kann ein aktuelles Bewegungsprofil für die Antriebseinheit generiert werden. Somit ist eine fortlaufende und flexible Anpassung des von der Maschine auszuführenden Bewegungsablaufs möglich.

In diesem Fall kann der aktuelle Parameter einen Sensorwert einen Rezepturwert, eine Werkstückeigenschaft, eine Prozessgröße, einen Korrekturwert oder einen beliebig einstellbaren Parameter repräsentieren. Auf diese Weise kann die Variable automatisch oder durch eine Benutzereingabe auf einen aktuellen Wert gesetzt werden.

Gemäß einer Ausführungsform können der mindestens einen Variablen unterschiedliche Werte zugeordnet werden. Im Schritt des graphischen Darstellens können unterschiedliche Bewegungsprofile dargestellt werden, die den unterschiedlichen Werten zugeordnet sind. Auf diese Weise lassen sich die verwendeten Variablen verändern und entsprechende Auswirkungen auf das Bewegungsprofil simulieren und visualisieren.

Ferner kann im Schritt des graphischen Darstellens mindestens eine der Mehrzahl von Randbedingungen verändert werden, um eine veränderte Mehrzahl von Randbedingungen vorzubestimmen. Die veränderte Mehrzahl von Randbedingungen kann auf den Programmcode abgebildet werden. Somit kann beispielsweise eine fehlerhafte Randbedingung korrigiert werden, die bei der graphischen Darstellung aufgefallen ist.

Beispielsweise kann die Antriebseinheit Teil einer Verpackungsmaschine, einer Druckmaschine, einer Textilmaschine, einer Presse, einer Umformungsmaschine, einer Fertigungsmaschine oder einer sonstigen Automatisierungsanlage sein. Somit lässt sich der erfindungsgemäße Ansatz bei solchen Anwendungen vorteilhaft einsetzen.

Der mindestens einen Variablen oder Formelbeziehung kann eine variable Produkteigenschaft, Werkstückeigenschaft, und/oder Prozessgröße eines, von der Maschine handzuhabenden Produkts, Werkstückes und/oder Prozesses zugeordnet sein. Beispielsweise kann die mindestens eine Variable einer Produktlänge, einem Produktdurchmesser, einem Druckmarkensensorwert, einem Abstand zweier aufeinanderfolgender Produkte, oder einer Formelbeziehung bzw. Kombination aus mehreren Produkteigenschaften zugeordnet sein. Somit kann auf eine steigende Produktvielfalt reagiert werden und die Flexibilität der Maschinen erhöht werden. Durch die Mehrzahl von Randbedingungen können Winkelbewegungen und/oder lineare Bewegungen einer elektrischen, hydraulischen und/oder pneumatischen Antriebseinheit definiert sein. Somit können mögliche Bewegungen, die von der Antriebseinheit ausgeführt werden, durch die Randbedingungen vordefiniert werden.

Dabei können die Mehrzahl von Randbedingungen ein lineares oder nicht-lineares Bewegungsprofil der Antriebseinheit definieren. Somit können auch komplexe Bewegungsabläufe vorbestimmt werden. Insbesondere können die Mehrzahl von Randbedingungen eine Kurvenscheibe der Antriebseinheit definieren. Die Kurvenscheibe kann dabei eine zeitliche Abfolge von Winkelbewegungen definieren, die von der Antriebseinheit ausgeführt werden. Dabei können auch Winkelgeschwindigkeiten und Winkelbeschleunigungen definiert sein.

In der Formelbeziehung kann auf eine andere der Mehrzahl von Randbedingungen verwiesen werden. Dabei kann die andere der Mehrzahl von Randbedingung selbst wieder durch Angabe von symbolischen Größen, Zusammenhängen und Formelbeziehungen definiert werden. Somit können Rekursionen eingefügt werden.

Gemäß einer Ausführungsform können im Schritt des Vorbestimmens eine Mehrzahl von ersten Randbedingungen vorbestimmt werden, um ein erstes variables Bewegungsprofil einer ersten Antriebseinheit zu definieren, und eine Mehrzahl von weiteren Randbedingungen vorbestimmt werden, um ein weiteres variables Bewegungsprofil einer weiteren Antriebseinheit zu definieren. Dabei können mindestens eine der ersten Randbedingung unter Verwendung mindestens einer ersten Variablen und/oder einer ersten Formelbeziehung und mindestens eine der weiteren Randbedingung unter Verwendung mindestens einer weiteren Variablen und/oder einer weiteren Formelbeziehung definiert werden. Im Schritt des graphischen Darstellens kann ein, auf der Mehrzahl von ersten Randbedingungen und auf der Mehrzahl von weiteren Randbedingungen basierenden Bewegungsprofil dargestellt werden. Im Schritt des Abbildens können die Mehrzahl von ersten Randbedingungen und die Mehrzahl von weiteren Randbedingungen auf den Programmcode abgebildet werden, wobei der Programmcode mindestens einen, der ersten Variablen zugeordneten Platzhalter und/oder ein aufgelöstes Gleichungssystem der ersten Formelbeziehung und mindestens einen der weiteren Variablen zugeordneten Platzhalter und/oder ein aufgelöstes Gleichungssystem der weiteren Formelbeziehung umfasst, und wobei der Programmcode geeignet ist, um die erste Antriebseinheit entsprechend dem ersten variablen Bewegungsprofil und die weitere Antriebseinheit entsprechend dem weiteren variablen Bewegungsprofil anzusteuern. Somit ist der erfindungsgemäße Ansatz auch für Maschinen geeignet, die eine Mehrzahl von Antriebseinheiten aufweisen, die zusammenwirken.

Die vorliegende Erfindung schafft ferner eine Vorrichtung zur Generierung eines variablen Bewegungsprofils für eine Antriebseinheit einer Maschine, mit folgenden Merkmalen: einer Einrichtung zum Vorbestimmen einer Mehrzahl von Einzelbewegungen, um das variable Bewegungsprofil zu definieren, wobei mindestens eine der Einzelbewegung unter Verwendung mindestens einer Variablen und/oder einer Formelbeziehung definiert ist; einer Einrichtung zum Darstellen eines, auf der Mehrzahl von Einzelbewegungen basierenden Bewegungsprofils auf einer graphischen Oberfläche; und einer Einrichtung zum Abbilden der Mehrzahl von Einzelbewegungen auf einen Programmcode, wobei der Programmcode mindestens einen, der Variablen zugeordneten Platzhalter und/oder ein aufgelöstes Gleichungssystem der Formelbeziehung umfasst, und wobei der Programmcode geeignet ist, um die Antriebseinheit entsprechend dem variablen Bewegungsprofil anzusteuern. Die Vorrichtung kann in Hardware und/oder in Software realisiert sein.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einem Steuergerät ausgeführt wird.

Die Erfindung wird nachstehend anhand der beigefügte Zeichnungen beispielhaft näher erläutert. Es zeigen:
- Fig. 1: ein Ablaufdiagramm des erfindungsgemäßen Verfahrens, gemäß einem Ausführungsbeispiel der Erfindung;
- Fig. 2: ein Blockschaltbild einer erfindungsgemäßen Vorrichtung, gemäß einem Ausführungsbeispiel der Erfindung;
- Fig. 3: eine graphische Darstellungen zur Umsetzung eines flexiblen Bewegungsprofils, gemäß einem Ausführungsbeispiel der Erfindung; und
- Fig. 4: eine graphische Darstellungen zur Umsetzung eines starren Bewegungsprofils, gemäß dem Stand der Technik.

Gleiche oder ähnliche Elemente können in den nachfolgenden Figuren durch gleiche oder ähnliche Bezugszeichen versehen sein. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können.

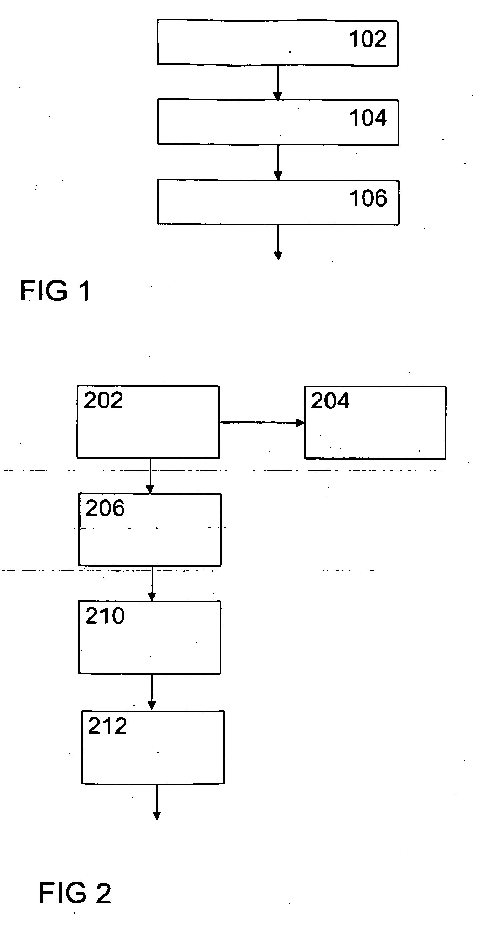

Fig. 1 zeigt ein Ablaufdiagramm eines Verfahrens zur Generierung eines variablen Bewegungsprofils für eine Antriebseinheit einer Maschine, gemäß einem Ausführungsbeispiel der vorliegenden Erfindung.

In einem Schritt des Vorbestimmens 102 können eine Mehrzahl von Randbedingungen bestimmt werden. Die Randbedingungen können ein variables Bewegungsprofil definieren. Das variable Bewegungsprofil kann eine Reihe von speziellen Bewegungsprofilen oder Bewegungsabläufen umfassen, die von der Maschine ausgeführt werden sollen. Die Randbedingungen können basierend auf einer Analyse eines von der Maschine zu lösenden Bewegungsproblems bestimmt werden. Dabei können Maschinencharakteristika sowie Charakteristika unterschiedlicher Gegenstände berücksichtigt werden, die von der Maschine bewegt oder bearbeitet werden sollen. Um die unterschiedlichen, speziellen Bewegungsprofile unter dem variablen Bewegungsprofil zusammenfassen zu können zur Definition der Randbedingungen Variablen oder Formelbeziehungen eingesetzt werden. Je mehr Parameter zum Zeitpunkt der Vorbestimmung der Randbedingungen noch nicht fest definiert werden können, je mehr Variablen können eingesetzt werden.

Im Kern bedeutet dies, dass die Bewegungsbahn und deren Randbedingungen nicht quantitativ sondern qualitativ in Form eines Gleichungssystems definiert werden. Das heißt die Eigenschaften einer Bewegungsbahn sind nicht direkt angegeben, sondern ergeben sich aus mindestens einer festgelegten mathematischen Beziehung. Diese Beziehung kann in Form von Variablen, Formeln oder den Bezug auf andere Eigenschaften der Bewegungsbahn definiert sein.

In einem Schritt des graphischen Darstellens 104 kann ein Bewegungsprofil angezeigt werden, das aus der Mehrzahl von Randbedingungen erstellt wird Das Bewegungsprofil kann so angezeigt werden, das es für einen Entwickler sichtbar ist. Um das Bewegungsprofil anzeigen zu können, können für die Variablen geeignete Werte eingesetzt, und die Formelbeziehungen aufgelöst werden. Somit kann es sich bei dem dargestellten Bewegungsprofil um ein spezielles Bewegungsprofil handeln, das unter die durch das variable Bewegungsprofil definierte Menge unterschiedlicher Bewegungsprofile fällt. Die für die Variablen eingesetzten Werte können vorbestimmt sein oder durch den Entwickler definiert werden. Insbesondere können für eine Variable jeweils unterschiedliche Werte eingesetzt werden und daraus resultierende unterschiedliche Bewegungsprofile dargestellt werden. Beispielsweise kann der Entwickler nach Ansicht eines Bewegungsprofils eine Anpassung einer oder mehrerer Variablen vornehmen und sich anschließend ein daraus resultierendes, angepasstes Bewegungsprofil darstellen lassen. Auf diese Weise lassen sich alle relevanten Bewegungsprofile grafisch darstellen, die unter das variable Bewegungsprofil fallen.

In einem Schritt des Abbildens 106 können die Mehrzahl von Randbedingungen auf einen Programmcode abgebildet werden. Dies kann automatisiert mittels einer vorbestimmten Abbildungsvorschrift erfolgen. Um die Variablen in den Programmcode zu integrieren, können in den Programmcode Platzhalter integriert werden. Dabei kann jeder Platzhalter einer der Variablen zugeordnet sein. Dabei wird die, im ersten Schritt vorgegebene Formelbeziehung ebenfalls in Programmcode umgesetzt. Das Verfahren beinhaltet eine Analyse der Formeln und Variablenbeziehungen auf gegenseitige Abhängigkeiten. Hierbei erfolgt eine Auflösung des Gleichungssystems unter anderem durch eine Sortierung der Formeln und Variablenbeziehungen entsprechend ihrer Abhängigkeiten. Der Programmcode kann in Form einer Software vorliegen, die beispielsweise von einem Steuergerät ausgeführt werden kann, um die Antriebseinheit so anzusteuern, das von der Maschine Bewegungen ausgeführt werden, die dem, durch die Randbedingungen definierten Bewegungsprofil entsprechen.

Ansprechend auf die graphische Darstellung können auch ein oder mehrere Randbedingungen geändert werden. Dies kann im Schritt der graphischen Darstellung 104 erfolgen, wobei nach einer Änderung der Randbedingungen eine erneute Darstellung des Bewegungsprofils erfolgen kann. Alternativ kann nach der graphischen Darstellung 104 auch ein erneuter Schritt des Vorbestimmens 102 durchgeführt werden, an dem sich ein erneuter Schritt der graphischen Darstellung 104 anschließen kann.

In einem weiteren Schritt kann der Programmcode ausgeführt werden. Zu Beginn oder während des Ausführens können die Platzhalter durch aktuelle Werte ersetzt werden. Somit können aktuelle Werte in den Programmcode integriert werden. Die aktuellen Werte können als Parameter, beispielsweise von dem Entwickler oder von einem Anwender, vorgegeben werden. Zusätzlich oder alternativ können aktuelle Werte automatisch erfasst werden. Dabei können die aktuellen Werte beispielsweise von Sensoren bereitgestellt werden Bei den Sensoren kann es sich beispiels weise um optische Sensoren oder Tastsensoren handeln, die Informationen über handzuhabende Körper erfassen und bereitstellen können. Der Programmcode kann ausgebildet sein, um selbstständig eine Abfrage der aktuellen Werte durchzuführen, um die entsprechenden Platzhalter zu ersetzen.

Das erfindungsgemäße Verfahren besteht somit aus zwei Kernideen. Zum einen werden Bewegungsprofile erfindungsgemäß nicht starr durch die Angabe fester Größen, z.B. 120mm, sondern durch die Angabe von symbolischen Größen, Zusammenhängen und Formelbeziehungen, z.B. Produktlänge*0,5/Produktdurchmesser, definiert. In den Formelbeziehungen kann auf andere Bewegungsprofileigenschaften Bezug genommen werden. Diese Bewegungsprofileigenschaften können selbst wieder durch Angabe von symbolischen Größen, Zusammenhängen und Formelbeziehungen definiert sein. Eine beliebige Rekursion ist möglich sofern sich kein Zirkelbezug ergibt. Sofort während des Engineering-Prozesses kann ein grafisches Resultat der Bewegungsbahn dargestellt werden. Dabei lassen sich die verwendeten Variablen, hier z.B.: die Produktlänge, etc..., verändern und die Auswirkung auf die resultierende Bewegungsbahn in Echtzeit simulieren und visualisieren.

In einem zweiten Schritt wird dann automatisch aus den festgelegten Zusammenhängen der nötige Programmcode erzeugt der später auf die ausführende Maschinensteuerung geladen wird. Dieser erzeugt dann zur Laufzeit aus den gegebenen Prozessdaten, die durch Sensoren oder Parametrierung gegeben sind, anhand der vorher festgelegten Zusammenhänge die nötigen Bewegungsprofile.

Fig. 2 zeigt eine schematische Darstellung einer Vorrichtung zur Generierung eines variablen Bewegungsprofils, gemäß einem Ausführungsbeispiel der vorliegenden Erfindung. Die Vorrichtung weist eine Einrichtung 202 zum Vorbestimmen einer Mehrzahl von Einzelbewegungen, eine Einrichtung 204 zum Darstellen eines Bewegungsprofils auf einer graphischen Oberfläche und eine Einrichtung 206 zum Abbilden der Mehrzahl von Einzelbewegungen auf einen Programmcode auf. Die Vorrichtung kann ausgebildet sein, um das erfindungsgemäße Verfahren zur Generierung eines variablen Bewegungsprofils auszuführen. Dabei könner die Vorrichtung oder einzelne Einheiten der Vorrichtung beispielsweise in Software auf einem Steuergerät realisiert sein. Auch kann die Vorrichtung in Form eines Entwicklungs-Tools bereitgestellt werden.

Der Programmcode kann über eine entsprechende Schnittstelle an eine Steuereinrichtung 210 bereitgestellt werden. Die Steuereinrichtung 210 kann ausgebildet sein, um den Programmcode auszuführen. Ansprechend auf eine Ausführung des Programmcodes kann die Steuereinrichtung 210 ausgebildet sein, um eine Antriebseinheit 212 der Maschine so anzusteuern, dass die Antriebseinheit 212 Bewegungen ausführt, wie sie durch das Bewegungsprofil definiert sind.

Die Einrichtung 202 kann eine Schnittstelle aufweisen, die geeignet ist, um es einen Entwickler zu ermöglichen, die Randbedingungen einzugeben. Die Randbedingungen können beispielsweise definieren, in welcher Zeit und/oder zu welchem Zeitpunkt die Antriebseinheit 212 eine Drehbewegung mit einem bestimmten Winkel oder eine lineare Bewegung einer bestimmten Länge und Richtung auszurührt. Ferner können die Randbedingungen eine Geschwindigkeit und/oder eine Beschleunigung definieren, mit der eine Bewegung durchgeführt werden soll. Für den Fall, dass die Antriebseinheit 212 ausgebildet ist, um eine Drehbewegung auszuführen, kann über die Randbedingungen eine Kurvenscheibe definiert werden. Die Kurvenscheibe kann einen nichtlinearen Bewegungsablauf der Antriebseinheit 212 definieren. Die Einrichtung 202 kann eine Schnittstelle aufweisen, über die Steuersignale an eine graphische Oberfläche, beispielsweise in Form eines Displays, ausgegeben werden können. Ansprechend auf die Steuersignale kann auf der graphischen Oberfläche ein Bewegungsprofil angezeigt werden, das durch die Randbedingungen und entsprechende Variablenwerte definiert ist. Die Einrichtung 202 oder die Einrichtung 204 können ferner eine Schnittstelle aufweisen, die es ermöglicht, den Variablen unterschiedliche Werte zuzuweisen.

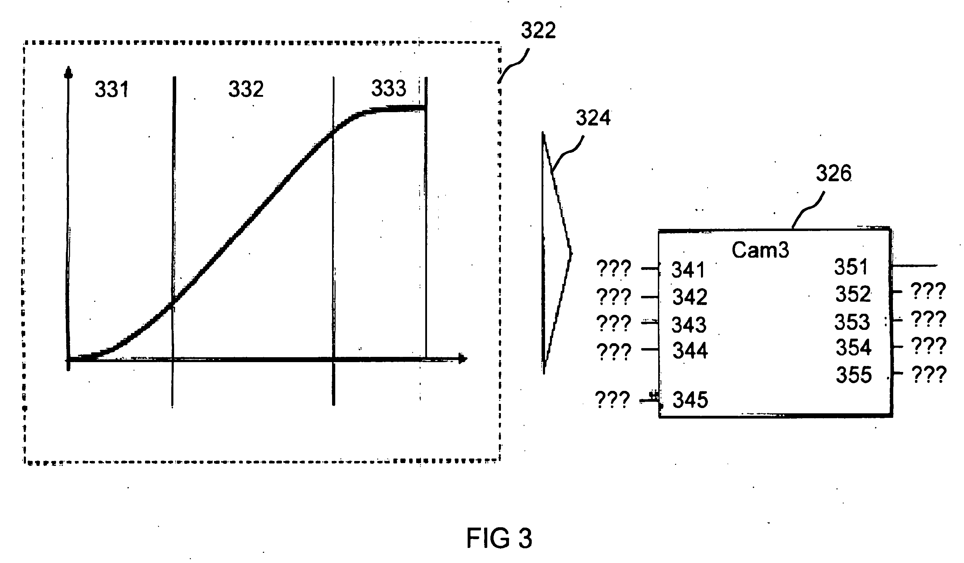

Fig. 3 zeigt eine graphische Darstellung zur Umsetzung eines flexiblen Bewegungsprofils 322 durch eine automatische Codegenerierung 324 in einen Programmcode 326, gemäß einem Ausführungsbeispiel der vorliegenden Erfindung.

Das Bewegungsprofil 322 ist durch einen Graphen dargestellt, der einen ersten Schritt 331, einen zweiten Schritt 332 und einen dritten Schritt 333 aufweist. Jeder Schritt 331, 332, 333 kann eine Bewegung oder einen Bewegungsabschnitt definieren, der einen Teil des Bewegungsprofils 322-darstellt. Die Schritte 331, 332, 333 können erfindungsgemäß als Randbedingungen vorbestimmt werden. Gemäß diesem Ausführungsbeispiel sind die Bewegungen der Schritte 331, 332, 333 nicht fest definiert, sondern weisen Variablen oder Formelbeziehungen auf. Der erste Schritt 331 kann eine Bewegung definieren, die als Variable einen Produktabstand umfasst. Gemäß diesem Ausführungsbeispiel definiert der erste Schritt 331 eine Bewegung, die einem halben Produktabstand entspricht (Produktabstand / 2). Bei dem Produktabstand kann es sich um einen räumlichen Abstand zwischen zwei aufeinanderfolgenden Produkten handeln, die von der Maschine gehandhabt werden. Der zweite Schritt 332 kann eine Bewegung definieren, die als Variable eine Produktlänge umfasst. Gemäß diesem Ausführungsbeispiel definiert der zweite Schritt 332 eine Bewegung, die dem zehnfachen der Produktlänge entspricht (Produktlänge *10). Bei der Produktlänge kann es sich um einen räumliche Ausdehnung des Produktes handeln, das von der Maschine gehandhabt wird. Der dritte Schritt 333 kann eine Bewegung definieren, die als Variable Werte aufweist, wie sich aus dem ersten Schritt 331 und dem zweiten Schritt 332 ergeben. Gemäß diesem Ausführungsbeispiel definiert der dritte Schritt 333 eine Bewegung, die 360 abzüglich dem ersten Schritt und abzüglich dem zweiten Schritt entspricht (360- Schritt 1- Schritt 2). Die Schritte 331, 332, 333 sind nur beispielhaft genannt. Das Bewegungsprofil 322 kann alternativ auch mehr, weniger oder andere als die beschriebenen Schritte aufweisen. Auch können einzelne der Schritte nicht durch Variablen oder Formelbeziehungen, sondern fest definiert sein.

Das Bewegungsprofil 322, kann nach Vorbestimmung der Randbedingungen, beispielsweise in der gezeigten Form auf einer graphischen Oberfläche, grafisch dargestellt werden.

Mithilfe der automatischen Codegenerierung 324 kann der als Befehlscodeblock Cam3 326 dargestellte Befehlscode generiert werden. Hierbei erfolgt eine Umsetzung des durch Variablen und Formeln gegebenen Gleichungssystems in eine Sequenz von Maschinenausführbaren Befehlscodesequenz. Der Befehlscodeblock 326 weist eingangsseitig die Eingänge "Execute" 341, "SetNumber" 342, "Produktlänge" 343, "Produktabstand" 344 und "Axis" 345 auf. Ausgangsseitig weist der Befehlscodeblock 326 die Ausgänge "Done" 351, "Active" 352, "Error" 353, "ErrorID" 354 und "Errorldent" 355 auf.

Die gezeigten Ausführungsbeispiele sind nur beispielhaft gewählt und können miteinander kombiniert werden.

Umfasst ein Ausführungsbeispiel eine "und/oder" Verknüpfung zwischen einem ersten Merkmal und einem zweites Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichenliste

- 102, 104, 106: Verfahrensschritte
- 202: Einrichtung zum Vorbestimmen
- 204: Einrichtung zum Darstellen
- 206: Einrichtung zum Abbilden
- 210: Steuereinrichtung
- 212: Antriebseinheit
- 322: Bewegungsprofil
- 324: automatische Codegenerierung
- 326: Programmcode
- 341, 342, 343, 344, 345: Eingänge
- 351, 352, 353, 354, 355: Ausgänge
- 331, 332, 333: Schritte
- 422: Bewegungsprofil
- 424: Codegenerierung
- 431, 432, 433: Schritte

## Patentansprüche

1. Verfahren zur Generierung eines variablen Bewegungsprofils für eine Antriebseinheit einer Maschine, das die folgenden Schritte umfasst:
Vorbestimmen (102) einer Mehrzahl von Randbedingungen, um das variable Bewegungsprofil zu definieren, wobei eine Randbedingung eine bestimmte Bewegung definiert, die von der Antriebseinheit ausgeführt werden kann und mindestens eine der Randbedingung unter Verwendung mindestens einer Variablen und/öder einer Formelbeziehung definiert wird;
Graphisches Darstellen (104) eines, auf der Mehrzahl von Randbedingungen basierenden Bewegungsprofils (322); und
Abbilden (106) der Mehrzahl von Randbedingungen auf einen Programmcode, wobei der Programmcode mindestens einen, der Variablen zugeordneten Platzhalter und/oder ein aufgelöstes Gleichungssystem der Formelbeziehung umfasst, und wobei der Programmcode eingerichtet ist, die Antriebseinheit (212) entsprechend dem variablen Bewegungsprofil anzusteuern,
**dadurch gekennzeichnet dass**,
im Schritt des graphischen Darstellens (104) mindestens eine der Mehrzahl von Randbedingungen verändert wird, um eine veränderte Mehrzahl von Randbedingungen vorzubestimmen, wobei die veränderte Mehrzahl von Randbedingungen auf den Programmcode abgebildet wird, wobei der Programmcode ausgebildet ist, um bei seiner Ausführung, den mindestens einen Platzhalter durch einen aktuellen Parameter zu ersetzen und/oder ein Ergebnis des aufgelösten Gleichungssystems der Formelbeziehung zu berechnen, um ein aktuelles Bewegungsprofil für die Antriebseinheit (212) zu generieren.

2. Verfahren gemäß Anspruch 1, bei dem der aktuelle Parameter einen Sensorwert, einen Rezepturwert, eine Werkstückeigenschaft, eine Prozessgröße, einen Korrekturwert oder einen beliebig einstellbaren Parameter repräsentiert.

3. Verfahren gemäß einem der vorstehenden Ansprüche, bei dem der mindestens einen Variablen unterschiedliche Werte zugeordnet werden, und wobei im Schritt des graphischen Darstellens (104) unterschiedliche Bewegungsprofile dargestellt werden, die den unterschiedlichen Werten zugeordnet sind.

4. Verfahren gemäß einem der vorstehenden Ansprüche, bei dem die Antriebseinheit (212) Teil einer Verpackungsmaschine, einer Druckmaschine, einer Textilmaschine, einer Presse, einer Umformungsmaschine, einer Fertigungsmaschine oder einer sonstigen Automatisierungsanlage ist.

5. Verfahren gemäß einem der vorstehenden Ansprüche, wobei die mindestens eine Variable oder Formelbeziehung einer variablen Produkteigenschaft, Werkstückeigenschaft, und/oder Prozessgröße eines, von der Maschine handzuhabenden Produkts, Werkstücks und/oder Prozesses zugeordnet ist.

6. Verfahren gemäß Anspruch 5, bei dem die mindestens eine Variable einer Produktlänge, einem Produktdurchmesser, einem Druckmarkensensorwert oder einem Abstand zweier aufeinanderfolgender Produkte zugeordnet ist.

7. Verfahren gemäß einem der vorstehenden Ansprüche, bei dem durch die Mehrzahl von Randbedingungen (331, 332, 333) Winkelbewegungen und/oder lineare Bewegungen einer elektrischen, hydraulischen und/oder pneumatischen Antriebseinheit definiert sind.

8. Verfahren gemäß einem der vorstehenden Ansprüche, bei dem die Mehrzahl von Randbedingungen (331, 332, 333) ein lineares oder nicht-lineares Bewegungsprofil der Antriebseinheit definieren.

9. Verfahren gemäß einem der vorstehenden Ansprüche, bei dem die Mehrzahl von Randbedingungen eine Kurvenscheibe der Antriebseinheit (212) definieren.

10. Verfahren gemäß einem der vorstehenden Ansprüche, bei dem in der Formelbeziehung auf eine andere der Mehrzahl von Randbedingungen verwiesen wird, wobei die andere der Mehrzahl von Randbedingung selbst wieder durch Angabe von symbolischen Größen, Zusammenhängen und Formelbeziehungen definiert sein kann.

11. Verfahren gemäß einem der vorstehenden Ansprüche, bei dem im Schritt des Vorbestimmens (102) eine Mehrzahl von ersten Randbedingungen vorbestimmt wird, um ein erstes variables Bewegungsprofil einer ersten Antriebseinheit zu definieren, und eine Mehrzahl von weiteren Randbedingungen vorbestimmt wird, um ein weiteres variables Bewegungsprofil einer weiteren Antriebseinheit zu definieren wobei mindestens eine der ersten Randbedingung unter Verwendung mindestens einer ersten Variablen und/oder einer ersten Formelbeziehung und mindestens eine der weiteren Randbedingung unter Verwendung mindestens einer weiteren Variablen und/oder einer weiteren Formelbeziehung definiert wird, und bei dem im Schritt des graphischen Darstellens (104) ein, auf der Mehrzahl von ersten Randbedingungen und auf der Mehrzahl von weiteren Randbedingungen basierenden Bewegungsprofil dargestellt wird, und bei dem im Schritt des Abbildens (106) die Mehrzahl von ersten Randbedingungen und die Mehrzahl von weiteren Randbedingungen auf den Programmcode abgebildet werden, wobei der Programmcode mindestens einen, der ersten Variablen zugeordneten Platzhalter und/oder ein aufgelöstes Gleichungssystem der ersten Formelbeziehung und mindestens einen der weiteren Variablen zugeordneten Platzhalter und/oder ein aufgelöstes Gleichungssystem der weiteren Formelbeziehung umfasst, und wobei der Programmcode geeignet ist, um die erste Antriebseinheit entsprechend dem ersten variablen Bewegungsprofil und die weitere Antriebseinheit entsprechend dem weiteren variablen Bewegungsprofil anzusteuern.

12. Vorrichtung zur Generierung eines variablen Bewegungsprofils für eine Antriebseinheit einer Maschine, mit folgenden Merkmalen:
einer Einrichtung (202) zum Vorbestimmen einer Mehrzahl von Einzelbewegungen, um das variable Bewegungsprofil zu definieren, wobei mindestens eine der Einzelbewegung unter Verwendung mindestens einer Variablen und/oder einer Formelbeziehung definiert ist;
einer Einrichtung (204) zum Darstellen eines, auf der Mehrzahl von Einzelbewegungen basierenden Bewegungsprofils auf einer graphischen Oberfläche; und
einer Einrichtung (206) zum Abbilden der Mehrzahl von Einzelbewegungen auf einen Programmcode, wobei der Programmcode mindestens einen, der Variablen zugeordneten Platzhalter und/oder ein aufgelöstes Gleichungssystem der Formelbeziehung umfasst, und wobei der Programmcode eingerichtet ist, die Antriebseinheit entsprechend dem variablen Bewegungsprofil anzusteuern,
**dadurch gekennzeichnet dass**,
die Einrichtung (204) zum Darstellen ausgebildet ist, um mindestens eine der Mehrzahl von Randbedingungen zu verändern, um eine veränderte Mehrzahl von Randbedingungen vorzubestimmen, wobei die Einrichtung (206) ausgebildet ist, um die veränderte Mehrzahl von Randbedingungen auf den Programmcode abzubilden, wobei der Programmcode ausgebildet ist, um bei seiner Ausführung, den mindestens einen Platzhalter durch einen aktuellen Parameter zu ersetzen und/oder ein Ergebnis des aufgelösten Gleichungssystems der Formelbeziehung zu berechnen, um ein aktuelles Bewegungsprofil für die Antriebseinheit (212) zu generieren.

13. Computerprogrammprodukt mit Programmcode, der auf einem maschinenlesbaren Träger gespeichert ist, zur Durchführung des Verfahrens nach einem der Ansprüche 1 bis 11, wenn das Programm auf einem Steuergerät ausgeführt wird.

## Claims

1. Method for generating a variable motion profile for a drive unit of a machine, which comprises the following steps:
predetermining (102) a plurality of boundary conditions in order to define the variable motion profile, a boundary condition defining a specific motion which can be executed by the drive unit, and at least one of the boundary conditions being defined by using at least one variable and/or one formulaic relationship;
graphic illustration (104) of a motion profile (322) based on the plurality of boundary conditions; and
mapping (106) the plurality of boundary conditions onto a program code, the program code comprising at least one placeholder assigned to the variable and/or a solved system of equations of the formulaic relationship, and the program code being set up to activate the drive unit (212) in accordance with the variable motion profile,
**characterized in that**
in the step of the graphic illustration (104) at least one of the plurality of boundary conditions is changed in order to predetermine a changed plurality of boundary conditions, the changed plurality of boundary conditions being mapped to the program code, the program code being designed in order, when executed, to replace the at least one placeholder by a current parameter and/or to calculate a result of the solved system of equations of the formulaic relationship in order to generate a current motion profile for the drive unit (212).

2. Method according to Claim 1, in which the current parameter is a sensor value, a recipe value, a workpiece characteristic, a process variable, a correction value or an arbitrary adjustable parameter.

3. Method according to one of the preceding claims, in which the at least one variable is assigned different values, and in the step of the graphic illustration (104) different motion profiles are illustrated which are assigned to the different values.

4. Method according to one of the preceding claims, in which the drive unit (212) is part of a packing machine, a printing machine, a textile machine, a press, a shaping machine, a production machine or another automation system.

5. Method according to one of the preceding claims, in which the at least one variable or formulaic relationship is assigned to a variable product characteristic, workpiece characteristic and/or process variable of a product, workpiece and/or process to be handled by the machine.

6. Method according to Claim 5, in which the at least one variable is assigned to a product length, a product diameter, a printing mark sensor value or a distance between two successive products.

7. Method according to one of the preceding claims, in which the plurality of boundary conditions (331, 332, 333) define angular movements and/or linear movements of an electric, hydraulic and/or pneumatic drive unit.

8. Method according to one of the preceding claims, in which the plurality of boundary conditions (331, 332, 333) define a linear or non-linear motion profile of the drive unit.

9. Method according to one of the preceding claims, in which the plurality of boundary conditions define a cam disc of the drive unit (212).

10. Method according to one of the preceding claims, in which reference is made in the formulaic relationship to another of the plurality of boundary conditions, the other one of the plurality of boundary conditions itself possibly being defined, in turn, by specification of symbolic variables, correlations and formulaic relationships.

11. Method according to one of the preceding claims, in which in the step of predetermination (102) a plurality of first boundary conditions is predetermined in order to define a first variable motion profile of a first drive unit, and a plurality of further boundary conditions is predetermined in order to define a further variable motion profile of a further drive unit, at least one of the first boundary conditions being defined by using at least one first variable and/or one first formulaic relationship, and at least one of the further boundary conditions being defined by using at least one further variable and/or one further formulaic relationship, and in which in the step of the graphic illustration (104) a motion profile based on the plurality of first boundary conditions and on the plurality of further boundary conditions is illustrated, and in which in the step of mapping (106) the plurality of first boundary conditions and the plurality of further boundary conditions are mapped onto the program code, the program code comprising at least one placeholder, assigned to the first variable, and/or a solved system of equations of the first formulaic relationship, and at least one placeholder assigned to the further variable, and/or a solved system of equations of the further formulaic relationship, and the program code being suitable for activating the first drive unit in accordance with the first variable motion profile, and for activating the further drive unit in accordance with the further variable motion profile.

12. Apparatus for generating a variable motion profile for a drive unit for a machine, having the following features:
a device (202) for predetermining a plurality of individual movements in order to define the variable motion profile, at least one of the individual movements being defined by using at least one variable and/or one formulaic relationship;
a device (204) for illustrating a motion profile based on the plurality of individual movements on a graphical interface; and
a device (206) for mapping the plurality of individual movements onto a program code, the program code comprising at least one placeholder assigned to the variable, and/or a solved system of equations of the formulaic relationship, and the program code being set up to activate the drive unit in accordance with the variable motion profile,
**characterized in that**
the device (204) for illustration is designed in order to change at least one of the plurality of boundary conditions in order to predetermine a changed plurality of boundary conditions, the device (206) being designed in order to map the changed plurality of boundary conditions onto the program code, the program code being designed in order, when it is executed, to replace the at least one placeholder by a current parameter, and/or to calculate a result of the solved system of equations of the formulaic relationship in order to generate a current motion profile for the drive unit (212).

13. Computer program product having program code, which is stored on a machine-readable carrier, for carrying out the method according to one of Claims 1 to 11 when the program is executed on a control unit.

## Revendications

1. Procédé pour générer un profil de mouvement variable pour une unité d'entraînement d'une machine, comprenant les étapes suivantes :
prédétermination (102) d'une pluralité de conditions limites, afin de définir le profil de mouvement variable, une condition limite définissant un mouvement déterminé, qui peut être effectué par une unité d'entraînement et au moins l'une des conditions limites étant définie en utilisant au moins une variable et/ou une formule ;
illustration graphique (104) d'un profil de mouvement (322) basé sur la pluralité de conditions limites ; et
reproduction (106) de la pluralité de conditions limites sur un code programme, le code programme comprenant au moins un paramètre fictif associé à la variable et/ou un système d'équations de la formule, et le code programme étant prévu pour commander l'unité d'entraînement (212) en fonction du profil de mouvement variable,
**caractérisé en ce que**
pendant l'étape d'illustration graphique (104), au moins l'une de la pluralité de conditions limites est modifiée afin de prédéterminer une pluralité de conditions limites modifiée, la pluralité de conditions limites modifiée étant reproduite sur le code programme, le code programme étant réalisé pour remplacer lors de sa mise en oeuvre, l'au moins un paramètre fictif par un paramètre actuel et/ou pour calculer un résultat du système d'équations résolu de la formule afin de générer un profil de mouvement actuel pour l'unité d'entraînement (212).

2. Procédé selon la revendication 1, dans lequel le paramètre actuel est une valeur de capteur, une valeur de réception, une propriété d'une pièce, une grandeur de processus, une valeur de correction ou un paramètre ajustable de manière quelconque.

3. Procédé selon l'une quelconque des revendications précédentes, dans lequel différentes valeurs sont associées à l'au moins une variable, et dans lequel, dans l'étape d'illustration graphique (104), différents profils de mouvement sont illustrés, lesquels sont associés à des valeurs différentes.

4. Procédé selon l'une quelconque des revendications précédentes, dans lequel l'unité d'entraînement (212) fait partie d'une machine d'emballage, d'une machine d'impression, d'une machine textile, d'une presse, d'une machine de formage, d'une machine de fabrication ou d'une autre installation d'automatisation.

5. Procédé selon l'une quelconque des revendications précédentes, dans lequel l'au moins une variable ou formule est associée à une propriété de produit, une propriété d'une pièce, et/ou une grandeur de processus variables, d'un produit, d'une pièce et/ou d'un processus à traiter par la machine.

6. Procédé selon la revendication 5, dans lequel l'au moins une variable est associée à une longueur de produit, un diamètre de produit, une valeur de capteur d'une marque d'impression ou une distance entre deux produits successifs.

7. Procédé selon l'une quelconque des revendications précédentes, dans lequel des mouvements angulaires et/ou des mouvements linéaires d'une unité d'entraînement électrique, hydraulique et/ou pneumatique sont définis par la pluralité de conditions limites (331, 332, 333).

8. Procédé selon l'une quelconque des revendications précédentes, dans lequel la pluralité de conditions limites (331, 332, 333) définit un profil de mouvement linéaire ou non linéaire de l'unité d'entraînement.

9. Procédé selon l'une quelconque des revendications précédentes, dans lequel la pluralité de conditions limites définit une came de l'unité d'entraînement (212).

10. Procédé selon l'une quelconque des revendications précédentes, dans lequel, dans la formule, on se réfère à une autre de la pluralité de conditions limites, l'autre de la pluralité de conditions limites pouvant elle-même être définie à son tour par l'indication de grandeurs, de rapports et de formules symboliques.

11. Procédé selon l'une quelconque des revendications précédentes, dans lequel, dans l'étape de prédétermination (102), une pluralité de premières conditions limites est prédéterminée, afin de définir un premier profil de mouvement variable d'une première unité d'entraînement, et une pluralité d'autres conditions limites est prédéterminée afin de définir un autre profil de mouvement variable d'une autre unité d'entraînement, au moins l'une des premières conditions limites étant définie en utilisant au moins une première variable et/ou une première formule et au moins l'une des autres conditions limites étant définie en utilisant au moins une autre variable et/ou une autre formule, et dans lequel, dans l'étape d'illustration graphique (104), un profil de mouvement basé sur la pluralité de premières conditions limites et sur la pluralité d'autres conditions limites étant illustré, et dans lequel dans l'étape de reproduction (106), la pluralité de premières conditions limites et la pluralité d'autres conditions limites sont reproduites sur le code programme, le code programme comprenant au moins un paramètre fictif associé à la variable et/ou un système d'équations résolu de la première formule et au moins un paramètre fictif associé à l'autre variable et/ou un système d'équations résolu de l'autre formule, et le code programme étant approprié pour commander la première unité d'entraînement en fonction du premier profil de mouvement variable et l'autre unité d'entraînement en fonction de l'autre profil de mouvement variable.

12. Dispositif pour générer un profil de mouvement variable pour une unité d'entraînement d'une machine, comprenant les caractéristiques suivantes
un dispositif (202) pour prédéterminer une pluralité de mouvements individuels, afin de définir le profil de mouvement variable, au moins l'un des mouvements individuels étant défini en utilisant au moins une variable et/ou une formule ;
un dispositif (204) pour illustrer un profil de mouvement basé sur la pluralité de mouvements individuels sur une surface graphique ; et
un dispositif (206) pour reproduire la pluralité de mouvements individuels sur un code programme, le code programme comprenant au moins un paramètre fictif associé à la variable et/ou un système d'équations résolu de la formule, et le code programme étant prévu pour commander l'unité d'entraînement en fonction du profil de mouvement variable,
**caractérisé en ce que**
le dispositif (204) pour illustrer est réalisé pour modifier au moins l'une de la pluralité de conditions limites, afin de prédéterminer une pluralité modifiée de conditions limites, le dispositif (206) étant réalisé pour reproduire la pluralité de conditions limites modifiée sur le code programme, le code programme étant réalisé pour remplacer lors de sa mise en oeuvre, l'au moins un paramètre fictif par un paramètre actuel et/ou pour calculer un résultat du système d'équations résolu de la formule afin de générer un profil de mouvement actuel pour l'unité d'entraînement (212).

13. Produit de programme informatique comprenant un code programme, qui est stocké sur un support lisible par machine, pour mettre en oeuvre le procédé selon l'une quelconque des revendications 1 à 11, lorsque le programme est exécuté sur un appareil de commande.
